**Europäisches Patentamt**

**European Patent Office**

**Office européen des brevets**

(19)

(11) Veröffentlichungsnummer: **0 091 982**
**B1**

(12) **EUROPÄISCHE PATENTSCHRIFT**

(45) Veröffentlichungstag der Patentschrift:
03.06.87

(51) Int. Cl.⁴: **D 21 B 1/02**

(21) Anmeldenummer: **82104932.7**

(22) Anmeldetag: **04.06.82**

(54) Verfahren und Vorrichtung zur Trennung von Zellstofflocken von deren Umhüllungen von Zellstoff-Hygieneartikeln.

(30) Priorität: **19.04.82 DE 3214294**

(43) Veröffentlichungstag der Anmeldung:
**26.10.83 Patentblatt 83/43**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**AT - B - 153 960**
**AT - B - 185 679**
**AT - B - 208 209**
**DE - A - 2 513 853**
**DE - A - 2 704 035**
**DE - A - 2 918 345**
**DE - B - 2 703 063**
**DE - C - 260 750**
**US - A - 4 236 676**
**US - A - 4 303 501**

(73) Patentinhaber: **Steffens, Bert, Auf der Jaugel 5,
D-5470 Andernach 13 (DE)**

(72) Erfinder: **Steffens, Bert, Auf der Jaugel 5,
D-5470 Andernach 13 (DE)**

(74) Vertreter: **Kraus, Walter, Dr. et al, Patentanwälte Kraus,
Weisert & Partner Thomas-Wimmer-Ring 15,
D-8000 München 22 (DE)**

ACTORUM AG

## Beschreibung

Die Erfindung betrifft ein Verfahren zur Trennung der Zellstoff-Flocken von deren Umhüllungen von Zellstoff-Hygieneartikeln, welche als Ausschuss bei der Herstellung, insbesondere von Höschenwindeln, Damenbinden, Krankenbettunterlagen mit Umhüllungen, wie Kunststoffolien, Tissue, Klebestreifen, Gummibändern oder dergleichen anfallen, wobei die Zellstoff-Hygieneartikel in den Wirkungsbereich von in einem Gehäuse rotierenden Mitnehmern gefördert, die Zellstoff-Flocken von den Mitnehmern freigesetzt sowie die freigesetzten Zellstoff-Flocken getrennt von den Umhüllungen aus dem Gehäuse abgesaugt und die Umhüllungen aus dem Wirkungsbereich der rotierenden Mitnehmer entfernt werden. Ausserdem betrifft die Erfindung eine Vorrichtung zum Durchführen dieses Verfahrens, die eine Zuführungsvorrichtung zum Zuführen der Zellstoff-Hygieneartikel in den Wirkungsbereich der rotierenden Mitnehmer und eine Abführungsvorrichtung zum Abführen der freigesetzten Zellstoff-Flocken aus dem Gehäuse aufweist.

Bekanntlich wird Holz als Rohstoff immer knapper, und die hieraus hergestellten Produkte werden daher immer teurer. Eines dieser Produkte ist hochwertig aufbereiteter Zellstoff in Form von Zellstoff-Flocken, die zur Herstellung von Saugkissen bei Zellstoff-Hygieneartikeln benötigt werden. Ebenso verhält es sich mit Kunststoffolien und Vliesstoffen, da auch deren chemische Grundstoffe ständig Preiserhöhungen erfahren.

Da bei der Herstellung der Zellstoff-Hygieneartikel ein nicht unbeträchtlicher Anteil an Ausschuss entsteht, ist es aufgrund der vorstehenden Verhältnisse ausserordentlich wichtig, aus diesem Ausschuss, der bei der Herstellung von Zellstoff-Hygieneartikeln unvermeidbar anfällt, die Rohstoffe zurückzugewinnen, damit eine Rohstoffeinsparung ermöglicht wird.

Das einfachste Verfahren hierfür besteht darin, die kompletten Zellstoff-Hygieneartikel insgesamt zu zermahlen, so dass also die Zellstoff-Flocken und die Kunststoffanteile nicht voneinander getrennt werden, und die Rohstoffe in diesem zermahlenen Zustand dem Produktionskreislauf wieder zuzuführen. Da hierbei jedoch sehr viele Kunststoffanteile mit zerkleinert und den Zellstoff-Flocken beigemischt werden, wird die Qualität der Zellstoff-Hygieneartikel hinsichtlich ihres Saugkissens herabgesetzt.

Es sind ausserdem auch schon Trennverfahren bekannt, die es ermöglichen, die Zellstoff-Flocken auf mechanischem Wege von der flächigen Umhüllung weitgehend abzutrennen. Diesen Verfahren haften jedoch bestimmte wirtschaftliche und technische Nachteile an.

So ist aus der deutschen Offenlegungsschrift 2 918 345 und der US-Patentschrift 4 303 501 ein Trennverfahren bekannt, das im wesentlichen auf einem Schwingsiebverfahren basiert. Da der zu behandelnde Ausschuss sehr voluminös ist, ist die Durchführung dieses Schwingsiebverfahrens sehr raumaufwendig, was einen wirtschaftlichen Nachteil darstellt. Ausserdem muss der Ausschuss vor dem Sieben zerkleinert werden.

Weiterhin ist in der deutschen Patentschrift 2 703 063 ein anderes Trennverfahren beschrieben, in dem die Zellstoff-Hygieneartikel zuerst teilweise zerschnitten werden, wonach sie diskontinuierlich in den Einzugsbereich von mit hoher Umfangsgeschwindigkeit rotierenden Mitnehmern gefördert werden. Hierbei werden die Hüllen aus Kunststoff auf die Mitnehmer aufgewickelt, der eingeschlossene Zellstoff wird freigesetzt und abgesaugt, und anschliessend werden die Hüllen unter Zerstückelung von den Mitnehmern gelöst und abgesaugt. Dieses Verfahren besitzt aus verschiedenen Gründen einen geringen Wirkungsgrad, da die Mitnehmer nach Eingabe einer geringen Menge von Zellstoff-Hygieneartikeln sehr schnell von den Hüllen umwickelt und damit wirkungslos werden. Daher kann pro Arbeitszyklus immer nur eine geringe Menge an Zellstoff-Hygieneartikeln verarbeitet werden. Es ist weiterhin zu bedenken, dass der gesamte Arbeitszyklus aus drei Arbeitsschritten besteht, und zwar beinhaltet der erste Arbeitsschritt das Zerschneiden und Einfüllen der Stücke der Zellstoff-Hygieneartikel in den Wirkungsbereich der Mitnehmer, wobei letztere die Zellstoff-Flocken freisetzen und die Hüllen auf den Mitnehmern aufgewickelt werden; der zweite Arbeitsschritt dient lediglich zum Absaugen der Flocken; und erst dann kann der dritte Arbeitsschritt durchgeführt werden, der im Zerschneiden der aufgewickelten Hüllen und deren Absaugung besteht. Durch diese verhältnismässig vielen Arbeitsschritte kommt es zwangsläufig zu einer noch weiteren Verschlechterung des Wirkungsgrads.

Schliesslich ist aus der deutschen Offenlegungsschrift 2 704 035 ein Trennverfahren bekannt, dessen wesentliche Merkmale darin bestehen, dass die Zellstoff-Hygieneartikel zunächst in einer Schneidmühle zerkleinert werden, wobei die Schneidmühle an ihrem Ausgang ein Sieb aufweist, welches eine starke Zerkleinerung in dem für das Verfahren notwendigen Masse ermöglicht. Zum Ansaugen des zerschnittenen Gutes durch das Sieb ist der Schneidmühle ein Ventilator nachgeordnet, der auch zunächst für den weiteren pneumatischen Transport sorgt. Bei der weiteren Durchführung des Verfahrens erfolgt eine Abtrennung eines grossen Teils der Luft des Luft-Transportgut-Gemisches, was durch einen Luftabscheider erreicht wird. Der Ausgang des Luftabscheiders ist mit dem Inneren eines Siebzylinders verbunden, in dessen zylindrischer Achse auf einer Welle starr angeordnete Rührarme rotieren. Der Siebzylinder sitzt in einem Gehäuse, welches im Abstand von dem Siebzylinder vorgesehen ist. Dieses Gehäuse fängt auch jene Zellstoff-Flocken auf, die durch die Bewegung der Rührarme durch den Siebzylinder hindurchtreten. An dem Ende des Siebzylinders, das dem Eintritt der Zellstoff-Flocken gegenüberliegt, wird ein Gemisch von Umhüllungsteilen und Zellstoff-Flocken aufgefangen, welche nicht durch die Siebwandung hindurchgetreten sind. Dieses Gemisch wird dann in eine weitere, identische Siebeinrichtung überführt, die sich allenfalls durch eine andere Siebmaschenweite unterscheidet. Auf diese Weise können kaskadenartig mehrere Zylindersiebanlagen hintereinander angeordnet werden.

Diesem Verfahren haften erhebliche Mängel an. So ist zum Beispiel der räumliche Aufwand zu seiner Durchführung noch grösser als bei dem Schwingsiebverfahren nach der vorgenannten deutschen Offenlegungsschrift 2 918 345 bzw. der US-Patentschrift 4 303 501. Das Trennverfahren nach der deutschen Offenlegungsschrift 2 704 035 umfasst mindestens vier Arbeitsschritte, wenn man von nur einem einzigen Siebzylinder ausgeht. Bei mehreren Siebzylindern ergeben sich leicht sieben oder mehr Arbeitsschritte. Der erste Arbeitsschritt beinhaltet die Beschickung, das Vorschneiden und das Absaugen durch das Sieb der Schneidmühle. Der zweite Arbeitsschritt betrifft das Luftabscheiden und den Transport zum Inneren der ersten Siebtrommel. Der dritte Arbeitsschritt beinhaltet das Sieben der Materialien, die durch die Maschen des Siebes hindurchtreten können. Der vierte Arbeitsschritt stellt die Sammlung und Übergabe der Mischmaterialien an den nächsten Siebzylinder dar. Anschliessend können der vorerwähnte dritte und vierte Arbeitsschritt mehrfach wiederholt werden. Die Schwierigkeit dieses Verfahrens besteht jedoch nicht nur in dem erheblichen Raumbedarf zu seiner Durchführung, sondern noch nachteiliger ist es, dass in der Praxis keine zufriedenstellende Trennung der Zellstoff-Flocken von ihren Umhüllungen mit diesem Verfahren zu erreichen ist. Das liegt insbesondere daran, dass die flächigen Umhüllungsteile an die Innenseite des Siebzylinders gepresst werden, da eine völlige Abtrennung der Luft am Ausgang des Luftabscheiders nicht möglich ist, denn ein Teil der Luft wird zum Zweck des weiteren Transports benötigt. Weiter haftet diesem Verfahren der Mangel an, dass nicht nur Zellstoff-Flocken sondern auch kleingeschnitzelte Umhüllungsteile in grösserer Menge durch die Siebtrommeln hindurchtreten, ohne dass die dadurch entstehende Mischung noch einmal nachbehandelt wird. Der Einsatz dieses Verfahrens ist also in der Praxis nicht in zufriedenstellender Weise möglich.

Aufgabe der Erfindung ist es demgegenüber insbesondere, ein Verfahren und eine Vorrichtung der eingangs genannten Art zu schaffen, die einen verhältnismässig geringen Raumbedarf hat und einen relativ grossen Wirkungsgrad besitzen, wobei das Verfahren aus möglichst wenigen Arbeitsschritten bestehen und auch dann mit den obigen Vorteilen durchführbar sein soll, wenn auf eine Vorzerkleinerung, welche räumlich vor dem eigentlichen Trennverfahren erfolgt, verzichtet wird.

Diese Aufgabe wird, ausgehend von einem Verfahren der eingangs genannten Art, erfindungsgemäss dadurch gelöst, dass die Zellstoff-Hygieneartikel von den rotierenden Mitnehmern, die an einem oder mehreren rotierenden Bauteilen angeordnet sind, allein oder in Zusammenwirken mit stationären Mitnehmergegenständen im wesentlichen zerschlagen werden, und dass gleichzeitig während des Zerschlagens die freigesetzten Zellstoff-Flocken über ein Sieb abgeführt werden, wobei entweder die Umhüllungen nur so grob zerschlagen werden, dass sie nicht durch das Sieb hindurchgehen, oder die Zellstoff-Flocken über das Sieb abgesaugt werden, bevor die Umhüllungen so fein zerschlagen sind, dass sie durch das Sieb hindurchgehen.

Die mit der Erfindung vorgeschlagene Vorrichtung zum Durchführen dieses Verfahrens zeichnet sich dadurch aus, dass die scharf oder stumpf ausgebildeten Mitnehmer, die an einem oder mehreren rotierenden Bauteilen beweglich oder starr angeordnet sind, allein oder zusammen mit stationären, beweglich oder starr vorgesehenen sowie scharf oder stumpf ausgebildeten Mitnehmergegenstücken so angeordnet und/oder ausgebildet sind, dass sie die Zellstoff-Hygieneartikel im wesentlichen zerschlagen, und dass zwischen den Mitnehmern und der Abführungsvorrichtung zumindest ein Sieb ganz oder teilweise um den durch die Rotation der Mitnehmer gebildeten Rotationskörper herum in einem derart geringen Abstand vorgesehen ist, dass auf der rauhen oder glatten Innenseite des Siebes befindliche zu trennende Materialien von den Mitnehmern erfassbar sind.

Es wurde nämlich überraschenderweise gefunden, dass es durch dieses Verfahren und mit dieser Vorrichtung, worin die rotierenden, starren oder beweglichen Mitnehmer allein oder zusammen mit den stationären, starren oder beweglichen Mitnehmergegenstücken ein Wirkungsfeld bilden, in dessen Lücken sich die zerrissenen Zellstoff-Hygieneartikel ausreichend ausbreiten können, ein Zerschlagen der Umhüllungen erreicht wird, anstatt dass sich die Umhüllungen um die Mitnehmer herumwickeln und diese in kurzer Zeit wirkungslos machen, wie es bei dem Verfahren und der Vorrichtung nach der weiter oben erörterten deutschen Patentschrift 2 703 063 der Fall ist. Bei diesem Zerschlagen kommt es, wie weiter bei den Unternehmungen, die zur vorliegenden Erfindung geführt haben, gefunden wurde, dazu, dass der bei dem Zerschlagen der Umhüllungen entstehende Umhüllungsabfall gegenüber den Zellstoff-Flocken zunächst relativ grobstückig ist und bleibt, so dass beim Absaugen der Zellstoff-Flocken durch ein entsprechendes Sieb eine hervorragende, praktisch quantitative Trennung von Zellstoff-Flocken und Umhüllungen erzielt wird.

Das konnte durch Versuche mit besonders markant gefärbten Umhüllungen nachgewiesen werden. Diese ausgezeichnete Trennung erfolgt aufgrund eines weiteren Effekts nicht nur in dem Sinn, dass die abgetrennten Zellstoff-Flocken frei von Umhüllungswerkstoffen sind, sondern auch in dem Sinn, dass das abgetrennte Umhüllungsmaterial, bei dem es sich um Kunststoff handelt, seinerseits weitgehend cellulosefrei ist. Es wurde nämlich festgestellt, dass im Gegensatz zu dem Verfahren nach der deutschen Patentschrift 2 703 063 bei der Erfindung auch eine Zerfaserung des Tissue erfolgt, bei dem es sich um Cellulosepapier ohne Binder handelt. Dadurch wird nicht nur verhindert, dass das Tissuematerial das Um-hüllungsmaterial «verunreinigt», sondern das Tis-suematerial wird in vorteilhafter Weise dem Herstellungsprozess als flüssigkeitsaufnahmefähiger Faserstoff zugeführt, ohne dass eine Qualitätsänderung des Saugkissenmaterials stattfindet. Das abgetrennte Umhüllungsmaterial kann wegen sei-ner weitgehenden Cellulosefreiheit in sehr vorteil-hafter Weise der Wiederverwendung zugeführt werden.

Diese Vorteile ergeben sich besonders ausgeprägt durch eine bewegliche Anordnung der Mitnehmer an dem rotierenden Bauteil, zum Beispiel an einer Welle, in welchem Falle eine besonders hervorragende Wirkung erzielt wird, und zwar auch ohne Mitnehmergegenstücke.

Hinsichtlich des vorstehenden Wirkungsfeldes ist zu beachten, dass es nicht zu dicht ist, denn ein zu dichtes Wirkungsfeld, in dem sich also die zer-rissenen Zellstoff-Hygieneartikel nicht ausrei-chend ausbreiten können, hätte ein Verstopfen und/oder ein Aufreissen der Umhüllungen in zu kleine Stücke bei gleichzeitig hoher Leistungsaufnahme des Antriebes zur Folge.

Weiterhin haben das Verfahren und die Vorrichtung nach der Erfindung nur einen verhältnismässig geringen Raumbedarf bei relativ hohem Wirkungsgrad.

Das Verfahren nach der Erfindung lässt sich sowohl diskontinuierlich als auch kontinuierlich durchführen; im ersteren Fall ergibt sich gegenüber dem Stand der Technik der zusätzliche Vorteil, dass das genannte Verfahren aus nur zwei Arbeitsschritten besteht, wobei im ersten Arbeitsschritt die, vorzugsweise nichtvorzerkleinerten, Zellstoff-Hygieneartikel diskontinuierlich chargenweise zu den Mitnehmern zugeführt, zerschlagen und dabei die freigesetzten Zellstoff-Flocken abgeführt werden, während im zweiten Arbeitsschritt daran anschliessend die zerschlagenen Umhüllungen vor Zuführung der nächsten Charge von Zellstoff-Hygieneartikeln aus dem Wirkungsbereich der Mitnehmer entfernt werden; für diesen zweiten Arbeitsschritt ist nur eine kurzzeitige Unterbrechung erforderlich, so dass der hohe Wirkungsgrad nicht beeinträchtigt wird.

Bei der kontinuierlichen Ausführung des Verfahrens werden gemäss der Erfindung die Zellstoff-Hygieneartikel in den einen Endbereich eines von den Mitnehmern durch Rotation gebildeten Rotationskörpers kontinuierlich zugeführt, während des Zerschlagens in Axialrichtung längs des Rotationskörpers gefördert und die zerschlagenen Umhüllungen am anderen Endbereich des Rotationskörpers kontinuierlich abgeführt, vorzugsweise abgesaugt, während die Zellstoff-Flokken in dem Zwischenbereich zwischen den beiden Endbereichen und gegebenenfalls in einem oder beiden Endbereichen des Rotationskörpers kontinuerlich abgeführt werden.

Das Fördern in Axialrichtung längs des Rota-tionskörpers kann durch entsprechende Ausbil-dung des Rotationskörpers selbst und/oder entsprechende Anordnung der Mitnehmer entlang der Rotationsachse und/oder durch entsprechende Ausbildung des von dem Gehäuse und dem Sieb gebildeten Mantels um den Rotationskörper herum erzielt werden. Die erstere Möglichkeit lässt sich in der Weise verwirklichen, dass der von den Mitnehmern durch Rotation gebildete Rotationskörper in seinem Durchmesser fortlaufend abnimmt, insbesondere ein Kegel ist, während sich die letzteren beiden Möglichkeiten dadurch verwirklichen lassen, dass die Mitnehmer entlang ihrer Rotationsachse spiralig angeordnet sind und/oder in engem Abstand von dem durch die Rotation der Mitnehmer gebildeten Rotationskörper spiralförmige Führungsleisten vorgesehen sind. Im ersteren Fall mündet die Zuführungsvorrichtung im Bereich des kleinen Durchmessers, während im Bereich des grossen Durchmessers eine kontinuierlich arbeitende Abführungsvorrichtung für die zerschlagenen Umhüllungen mündet; und in den letzteren beiden Fällen ist die Anordnung so, dass am Anfang des durch die spiralförmige Anordnung der Mitnehmer und/oder Führungsleisten gebildeten Transportwegs die Zuführungsvorrichtung und am Ende desselben eine kontinuierlich arbeitende Abführungsvorrichtung für die zerschlagenen Umhüllungen mündet. In allen diesen Fällen ist das Sieb, vorzugsweise zwischen dem Anfang und dem Ende des Transportwegs, der durch die axiale Erstreckung des Rotationskörpers festgelegt ist, ganz oder teilweise um den Rotationskörper angeordnet.

Im Falle einer diskontinuierlichen Vorrichtung hat der durch die Rotation der Mitnehmer gebildete Rotationskörper keine axiale Transportwirkung, und die Zuführungsvorrichtung sowie die Abführungsvorrichtung für die Zellstoff-Flocken einerseits und eine Abführungsvorrichtung für die zer-schlagenen Umhüllungen andererseits sind ab-wechselnd diskontinuierlich betreibbare Vorrich-tungen.

In allen Fällen können die Zellstoff-Flocken über mehrere hintereinander angeordnete Siebe abgesaugt werden, weiter ist es in allen Fällen möglich, die Zuführungsvorrichtung bezüglich des von den Mitnehmern gebildeten Rotationskörpers als axiale Zuführungsvorrichtung auszubilden, und schliesslich kann in jedem Falle vor oder in der Zuführungsvorrichtung eine Schneidvorrichtung vorgesehen sein. Stets erfolgt das Zerschlagen der Zellstoff-Hygieneartikel und das Trennen der Stoffe, aus denen diese bestehen, in einem einzigen Gehäuse bei geringem Raumaufwand.

Das verwendete Sieb kann insbesondere eines der folgenden sein:

(a) ein Blechsieb mit glatter Wirkfläche;

(b) ein Blechsieb mit rauher Wirkfläche, bei dem die durch die Lochung verbliebenen Stege oder Randzonen (Wulste) der Lochung ganz oder teilweise deformiert sind, vorzugsweise ein Schlitz-, Rund- oder Dreieck-Brückenlochsieb oder ein Sieb mit Raspellochungen, bei dem die Lochung mittels Durchdrücken des Materials mit spitzem Dorn hergestellt ist;

(c) ein Drahtsieb aus Drahtgeflecht oder Drahtgewebe, das eine rauhe Oberflächenstruktur aufweist; oder

(d) ein Drahtsieb oder Drahtgeflecht mit glatter Wirkfläche, die beispielsweise durch Walzen oder Pressen des Siebes geglättet worden ist.

Die Wirkfläche des Siebes ist die den Mitnehmern zugewandte Siebfläche, die auch als Innenfläche bezeichnet wird. Die Angabe «glatte» Wirkfläche bezieht sich auf die Fläche der Stege oder Brücken zwischen den Sieböffnungen.

Weiter kann die Vorrichtung so ausgebildet sein, dass die Mitnehmergegenstücke in den durch die Rotation der Mitnehmer gebildeten Rotationskörper eingreifen oder nicht eingreifen.

Schliesslich zeichnet sich eine weitere bevorzugte Ausführungsform dadurch aus, dass

(a) die Mitnehmer auf einem ebenen rotierenden Bauteil angeordnet sind und dass vorzugsweise die Mitnehmer und/oder die Mitnehmergegenstücke so ausgebildet sind, dass ihre Länge in Richtung des grösseren Durchmessers zunimmt, oder dass

(b) die Mitnehmer auf einem konischen rotierenden Bauteil angeordnet sind, wobei entweder das konische Bauteil oder das Gehäuse ganz oder teilflächig als Sieb ausgebildet ist, und in letzterem Falle die Abführungsvorrichtung für die Zellstoff-Flocken vorzugsweise ringkanalförmig auf dem Gehäuse vorgesehen ist.

Die Erfindung sei nachfolgend anhand einiger in den Figuren 1 bis 10 der Zeichnung im Prinzip dargestellter, besonders bevorzugter Ausführungsformen näher erläutert; es zeigen:

Fig. 1 eine erste Ausführungsform einer Vorrichtung nach der Erfindung, die eine Grundausführung darstellt;

Fig. 2 eine Abwandlung der Grundausführung nach Fig. 1, in der ein zusätzliches Sieb und mehrere Absperrschieber vorgesehen sind;

Fig. 3 eine Abwandlung der Grundausführung nach Fig. 1, in welcher die rotierenden Mitnehmer und das als Welle ausgebildete rotierende Bauteil, an dem die Mitnehmer gemäss Fig. 1 beweglich angeordnet sind, in doppelter Ausführung horizontal nebeneinander vorgesehen sind;

Fig. 4 eine zweite Ausführungsform einer Vorrichtung nach der Erfindung, die kontinuierlich arbeitet, wobei die Mitnehmerenden konisch angeordnet sind, so dass sich ein kegelförmiger Aufbau ergibt;

Fig. 5 eine dritte Ausführungsform einer erfindungsgemässen Vorrichtung, die ebenfalls kontinuierlich arbeitet, wobei jedoch die Mitnehmer eine spiralige Anordnung bilden und/oder eine spiralige Anordnung von Führungsleisten auf der Innenwandung des Gehäuses vorgesehen ist, wobei in Fig. 5 sowohl die spiralige Anordnung als auch die Führungsleisten eingezeichnet sind;

Fig. 6 eine vierte Ausführungsform der Erfindung, die diskontinuierlich arbeitet, wobei die Beschickung axial erfolgt und um die Mitnehmer herum ein Zylindersieb angeordnet ist oder ein oder mehrere Siebsegmente vorgesehen sind;

Fig. 7 eine Kombination einer an sich bekannten Schneidvorrichtung, die der Grundausführung nach Fig. 1 unmittelbar vorgeordnet ist, die jedoch auch einer der anderen Ausführungsformen der erfindungsgemässen Vorrichtung unmittelbar vorgeordnet sein kann; die Schneidvorrichtung kann auch entfernt von der eigentlichen erfindungsgemässen Vorrichtung aufgestellt sein, wobei dann der Transport der durch die Schneidvorrichtung vorzerschnittenen Zellstoff-Hygieneartikel mit einer herkömmlichen mechanischen oder pneumatischen Vorrichtung vorgenommen werden kann;

Fig. 8 eine fünfte und sechste Ausführungsform der Erfindung, die sich hinsichtlich der Mitnehmer und bezüglich des Vorsehens von Mitnehmergegenstücken unterscheiden, wobei diese unterschiedlichen Teile jeweils auf einer seitlichen Hälfte der Fig. 8 dargestellt sind;

Fig. 9 eine siebente Ausführungsform der Erfindung; und

Fig. 10 eine achte und neunte Ausführungsform der Erfindung, jeweils hälftig von der Mittellinie.

Im übrigen sind in allen Figuren der Zeichnung gleichartige oder entsprechende Bauteile weitgehendst mit den gleichen Bezugszeichen bezeichnet und daher nicht in jedem Falle erneut erläutert.

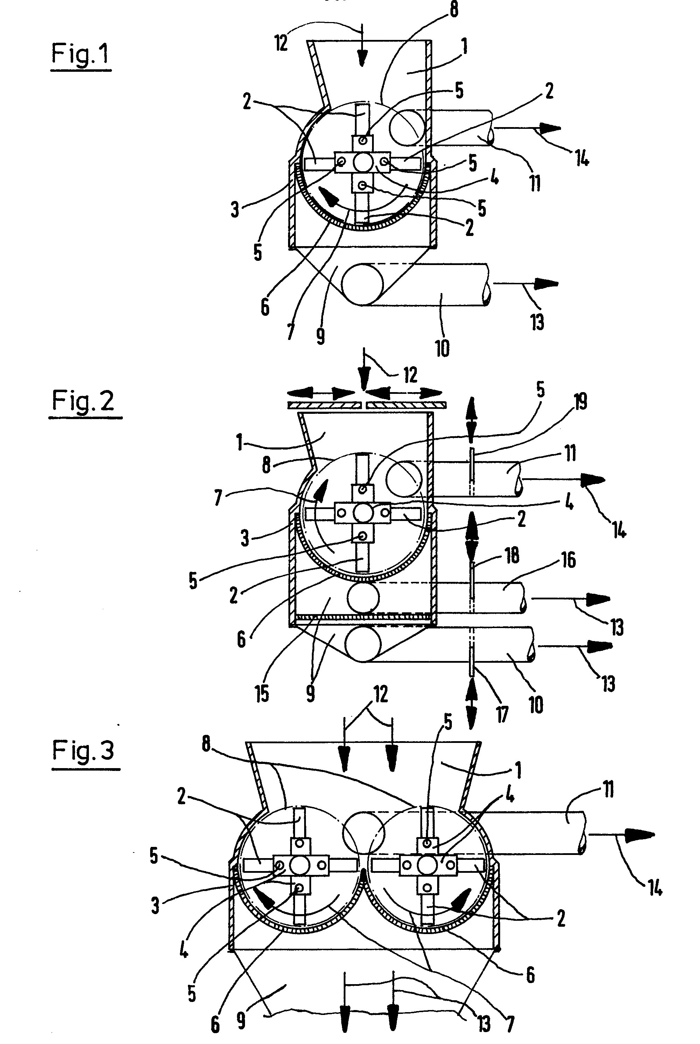

Es sei nun zuerst auf die Fig. 1 Bezug genommen, die eine erste Ausführungsform einer Vorrichtung, die es ermöglicht, Zellstoff-Hygieneartikel in der Weise zu verarbeiten, dass die Zellstoff-Flocken von den Umhüllungen getrennt werden, zeigt.

Diese Ausführungsform kann auch als Grundausführung bezeichnet werden, da sie praktisch die einfachste Ausführungsform ist.

Im einzelnen besitzt die Vorrichtung nach Fig. 1 eine Zuführungsvorrichtung 1 zum Zuführen der nichtdargestellten Zellstoff-Hygieneartikel. Diese Zuführungsvorrichtung 1 ist in der dargestellten Ausführungsform als Trichter ausgebildet, sie kann jedoch auch ein zylindrisches oder sonstiges Rohr sein, wobei diese Zuführungsvorrichtung 1 ausserdem noch eine nichtdargestellte Transportvorrichtung, wie beispielsweise ein Luftgebläse zum Erzeugen eines die Zellstoff-Hygieneartikel fördernden Luftstroms, ein endloses Förderband, eine Rutsche o. dgl. umfassen kann. Diese Zuführungsvorrichtung dient dazu, die Zellstoff-Hygieneartikel in den Wirkungsbereich von Mitnehmern 2 zu fördern, die in einem an die Zuführungsvorrichtung 1 unmittelbar anschliessenden Gehäuse 3 rotieren.

Die Mitnehmer 2 sind beweglich an einem als Welle ausgebildeten rotierenden Bauteil 4 angeordnet. Diese Mitnehmer 2 können beispielsweise längliche Körper, zum Beispiel Stäbe, aus einem schlagfesten Material, wie beispielsweise aus Stahl, sein. Die Mitnehmer 2 sind jeweils mittels einer Mitnehmeraufhängung 5, welche eine Relativbewegung zwischen den Mitnehmern 2 und dem rotierenden Bauteil 4 ermöglicht, an letzterem angebracht. Diese Mitnehmeraufhängung 5 kann ein an jedem Mitnehmer 2 oder je an einer Gruppe von Mitnehmern 2 angebrachter Mitnehmerbolzen sein, der vorzugsweise parallel zu der Drehachse des rotierenden Bauteils 4 angeordnet ist und um dessen Achse sich der Mitnehmer oder die Gruppe von Mitnehmern frei schwenken kann. Es ist jedoch auch möglich, die Mitnehmeraufhängung 5 als Mitnehmergelenk auszubilden, wobei entweder jeder einzelne Mitnehmer 2 oder je eine Gruppe von mehreren Mitnehmern 2 ein solches Mitnehmergelenk besitzt, dessen Gelenkachse vorzugsweise parallel zur Drehachse des rotierenden Bauteils 4 verläuft. Die Mitnehmergelenke können auch als Kugelgelenke oder sonstige, ein Schwenken in mehreren Richtungen ermöglichende Gelenke ausgebildet sein.

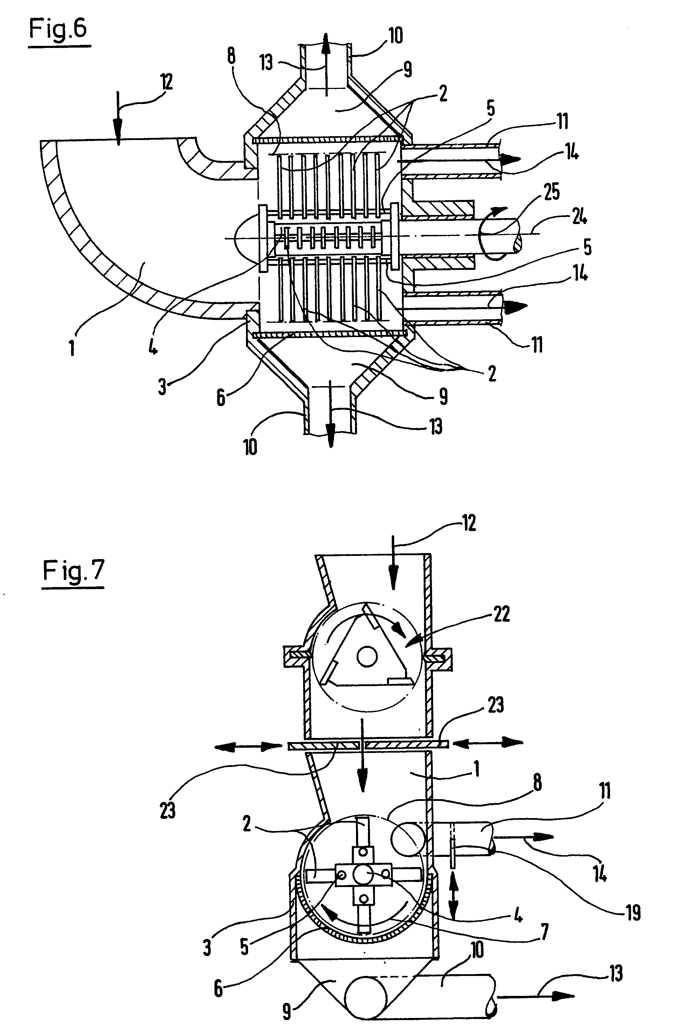

Ein Sieb 6 ist um den durch die mittels des Pfeils 7 angedeutete Rotation der Mitnehmer 2 gebildeten Rotationskörper 8 herum angeordnet, und zwar so, dass es sich um den halben Umfang dieses Rotationskörpers 8 herum erstreckt. Das Sieb 6 kann sich auch um einen kleineren oder grösseren Winkelbereich als 180° um den Umfang des Rotationskörpers 8 herum erstrecken, insbesondere kann es sich vollständig um den Rotationskörper 8 herum erstrecken, wenn das die konstruktive Ausbildung der Zuführungsvorrichtung 1 zulässt, zum Beispiel dann, wenn die Zuführungsvorrichtung 1, wie in Fig. 6 dargestellt, axial ausgeführt ist.

Wesentlich ist, dass die Mitnehmer 2 in einem derart geringen Abstand von dem Umfang des Rotationskörpers 8 vorgesehen sind, dass zu trennende Materialien, also die Materialien der Zellstoff-Hygieneartikel, noch von den Mitnehmern 2 erfasst werden können, wenn sie sich auf der den Mitnehmern 2 zugewandten Seite des Siebes 6, die als Innenseite bezeichnet ist, befinden. Es ist hierbei zu beachten, dass dieser «geringe Abstand» keineswegs so klein sein muss, wie es beispielsweise die Dicke der Zellstoff-Flocken ist, sondern dass dieser «geringe Abstand» gleich der oder kleiner als die Dicke eines Materialkeils ist, der aus den zu trennenden Materialien besteht und den die Mitnehmer im Betrieb der Vorrichtung vor sich her schieben, so dass er an der Innenseite des Siebes 6 vorbeigleitet. Die Einhaltung dieses «geringen Abstands» ist deswegen äusserst wichtig, weil sonst das Sieb 6 kurz nach Inbetriebnahme der Vorrichtung verstopft werden würde.

Auf der den Mitnehmern 2 abgewandten Seite des Siebes 6, die hier auch als Aussenseite bezeichnet wird, ist eine Abführungsvorrichtung 9 zum Abführen der freigesetzten Zellstoff-Flocken aus dem Gehäuse 3 vorgesehen. Diese Abführungsvorrichtung 9 kann, wie dargestellt, ein Trichter sein und ein Absaugrohr 10 für die Zellstoff-Flocken umfassen, das am verjüngten Ende des Trichters in letzteren mündet.

Weiterhin ist eine Abführungsvorrichtung 11 für die zerschlagenen Umhüllungen (also den Umhüllungsabfall) so vorgesehen, dass sie, bezogen auf die Strömungsrichtung der freigesetzten Zellstoff-Flocken, stromaufwärts vom Sieb 6 in das Innere des Gehäuses 3 mündet, und zwar vorzugsweise in unmittelbarer Nähe des Wirkungsbereichs der Mitnehmer 2. Diese Abführungsvorrichtung 11 ist vorliegend als Absaugrohr ausgebildet.

Es sei nun anhand der Betriebsweise der Vorrichtung nach Fig. 1 die Durchführung einer bevorzugten Ausführungsform des Verfahrens zur Trennung der Zellstoff-Flocken von deren Umhüllungen erläutert:

(1) In einem ersten Verfahrensschritt werden die aufzuarbeitenden Zellstoff-Hygieneartikel in einer Charge durch die Zuführungsvorrichtung 1 zu den rotierenden Mitnehmern 2 zugeführt; diese Zuführung ist durch den Pfeil 12 angedeutet. Hierbei werden die Zellstoff-Hygieneartikel durch die Mitnehmer zerschlagen und die darin befindlichen Zellstoff-Flocken über die Abführungsvorrichtung 9 durch das Absaugrohr 10 laufend abgesaugt, wie durch den Pfeil 13 angedeutet ist. Während dieses Verfahrensschritts ist die Abführungsvorrichtung 11 nicht in Betrieb, da andernfalls die freigesetzten Zellstoff-Flocken auch durch diese Abführungsvorrichtung 11 mit abgesaugt werden würden. Der erste Verfahrensschritt wird so lange betrieben, dass praktisch alle Zellstoff-Flocken freigesetzt werden, jedoch nur so lange, dass der Umhüllungsabfall noch grobstückig genug bleibt, also noch nicht durch das Sieb 6 durchgehen kann, sondern sich vielmehr im Inneren des Gehäuses ansammelt.

(2) Im zweiten Verfahrensschritt wird die Zuführung der Zellstoff-Hygieneartikel kurzzeitig gestoppt, und die zerschlagenen Umhüllungen werden mittels der Abführungsvorrichtung 11 aus dem Wirkungsbereich der rotierenden Mitnehmer 2 entfernt, wie durch den Pfeil 14 angedeutet ist. Hierzu ist eine nur verhältnismässig sehr kurze Unterbrechung der Beschickung der Vorrichtung mit Zellstoff-Hygieneartikeln erforderlich, so dass der hohe Wirkungsgrad dieser Vorrichtung dadurch praktisch nicht beeinträchtigt wird.

Die vorstehenden Verfahrensschritte (1) und (2) werden fortlaufend in der genannten Reihenfolge wiederholt, wodurch ein hoher Durchsatz an zu verarbeitenden Zellstoff-Hygieneartikeln erzielt werden kann.

Es sei nun auf Fig. 2 Bezug genommen, in der ebenso wie in den anderen Figuren der Zeichnung gleiche bzw. gleichartige Bauteile, Pfeile o. dgl., wie sie in Fig. 1 verwendet worden sind, mit den gleichen Bezugszeichen versehen sind. Die Vorrichtung nach Fig. 2 unterscheidet sich von derjenigen nach Fig. 1 dadurch, dass zur feineren Siebung der Zellstoff-Flocken in der Strömungsrichtung der letzteren dem Sieb 6 ein weiteres Sieb 15 nachgeordnet ist. Dieses Sieb braucht in seiner Form nicht mehr, wie das Sieb 6, das halbzylindrisch ausgebildet ist, der Form des Rotationskörpers 8 angepasst zu sein, sondern es kann, wie die Fig. 2 zeigt, zum Beispiel eben sein. In den Raum zwischen den beiden Sieben 6 und 15 mündet ein weiteres Absaugrohr 16, wodurch gewissermassen eine grobe Fraktion von Zellstoff-Flocken abgesaugt wird, während durch das Absaugrohr 10 eine feinere Fraktion der Zellstoff-Flocken entnommen wird.

Ausserdem sind in der Vorrichtung nach Fig. 2 Absperrschieber vorgesehen, und zwar ist ein erster Absperrschieber 23 in der Zuführungsvorrichtung 1 angeordnet, der zwei Absperrschieberteile aufweist, die in der Mitte des von der Zuführungsvorrichtung 1 gebildeten Zuführungskanals im geschlossenen Zustand aufeinandertreffen; diese Absperrschieberteile sind im Sinne der daneben eingezeichneten Doppelpfeile hin- und herbewegbar. Weiterhin ist ein Absperrschieber 17 und ein Absperrschieber 18 in dem Absaugrohr 10 bzw. 16 vorgesehen. Schliesslich ist noch ein Absperrschieber 19 in der Abführungsvorrichtung 11 angeordnet, und zwar ist dieser Absperrschieber 19 unmittelbar an der Mündung der Abführungsvorrichtung 11 in das Gehäuse 3 vorgesehen, damit sich vor dem Absperrschieber 19 während des Rotierens der Mitnehmer 2 kein Material ansammeln kann, welches die Abführungsvorrichtung 11 verstopfen könnte. Die Absperrschieber 17, 18 und 19 sind im Sinne der daneben eingezeichneten Doppelpfeile hin- und herbewegbar und können wegen des verhältnismässig nicht so grossen Durchmessers der Absaugrohre 10 und 16 jeweils nur ein bewegliches Schieberteil haben, sie können aber gewünschtenfalls auch aus zwei gegensinnig zueinander beweglichen Schieberteilen wie der Absperrschieber 23 aufgebaut sein.

Es sei hinsichtlich der Betriebsweise der Vorrichtung nach Fig. 2 noch darauf hingewiesen, dass natürlich beim Betrieb der Abführungsvorrichtung 11 ausser dem Absperrschieber 19 noch wenigstens einer der anderen Absperrschieber 17, 18 oder 23 geöffnet sein muss, da sonst ein zu starker Unterdruck im Gehäuse 3 entstehen bzw. ein nicht genügend starker Luftstrom zum Abführen des Umhüllungsabfalls verfügbar sein würde.

In der Ausführungsform nach Fig. 3 sind zwei rotierende Bauteile 4 mit Mitnehmern 2 horizontal nebeneinander so angeordnet, dass die Rotationsachsen der rotierenden Bauteile 4 parallel zueinander sind und sich die Rotationskörper 8 nur in einem geringen Abstand voneinander befinden, der vorzugsweise etwa gleich dem Abstand der Rotationskörper 8 von der Innenseite des Siebes 6 ist, das hier gemeinsam für beide Einheiten aus rotierendem Bauteil 4 und Mitnehmern 2 vorgesehen ist, und zwar ebenso wie die Zuführungsvorrichtung 1 und die Abführungsvorrichtungen 9 und 11.

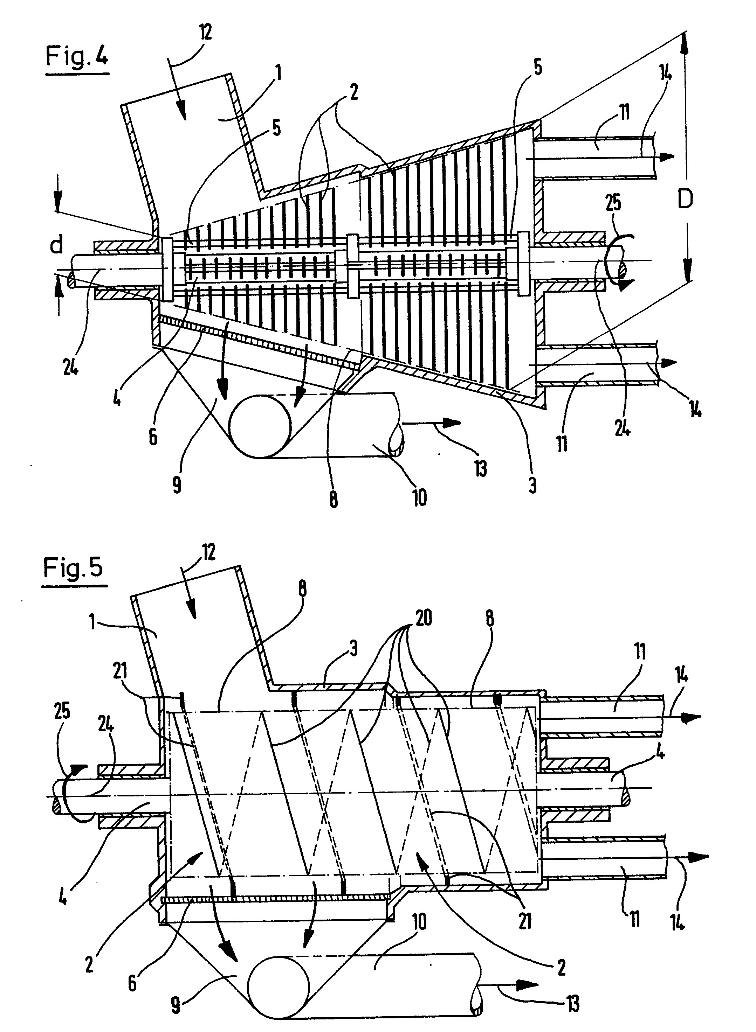

Während in den Fig. 1 bis 3 Vorrichtungen dargestellt sind, die diskontinuierlich chargenweise betrieben werden, sind in den Fig. 4 und 5 zwei Ausführungsformen von kontinuierlich betriebenen Vorrichtungen zum Trennen der Zellstoff-Flocken von den Umhüllungen dargestellt.

Es sei zunächst auf Fig. 4 Bezug genommen, wonach der von den Mitnehmern 2 durch Rotation gebildete Rotationskörper 8 ein Kegel ist. Das Gehäuse 3 ist dieser Kegelform entsprechend angepasst. Die Zuführungsvorrichtung 1 zum Zuführen der Zellstoff-Hygieneartikel mündet im Bereich des kleinen Kegeldurchmessers d, während im Bereich des grossen Kegeldurchmesser D eine kontinuierlich arbeitende Abführungsvorrichtung 11 in Form von vorzugsweise mehreren Absaugrohren mündet. Die Mündungen dieser Absaugrohre befinden sich, da der Umhüllungsabfall durch die Rotation der Mitnehmer 2 nach aussen geschleudert wird, in der Nähe des Umfangs des Rotationskörpers 8. Das Sieb 6 ist zwischen dem kleinen und grossen Kegeldurchmesser d bzw. D zumindest teilweise um den Rotationskörper 8 herum in einem Abstand angeordnet, wie er anhand der Ausführungsform nach der Fig. 1 erläutert wurde und der im übrigen auch für alle anderen Ausführungsformen gilt. Auf der Aussenseite des Siebes 6 ist die Abführungsvorrichtung 9 mit dem Absaugrohr 10 für die Zellstoff-Flocken vorgesehen. Das Verfahren, das mit dieser Vorrichtung durchgeführt wird, besteht darin, dass die Zellstoff-Hygieneartikel bei Pfeil 12 in den Bereich des kleinen Kegeldurchmessers d kontinuierlich zugeführt werden. Während des Zerschlagens der Zellstoff-Hygieneartikel erfolgt durch die Wirkung des kegelförmigen Rotationskörpers 8 ein Fördern der Materialien in Axialrichtung längs des Rotationskörpers 8 bis zu dem Bereich des grossen Kegeldurchmessers D. Der zerkleinerte Umhüllungsabfall wird dabei kontinuierlich über die Abführungsvorrichtung 11 abgesaugt, wie bei Pfeil 14 angedeutet ist. Gleichzeitig werden die Zellstoff-Flocken kontinuierlich über das Sieb 6 abgesaugt, wie bei Pfeil 13 angedeutet.

Da die Vorrichtung der Fig. 4 so betrieben (zugeführte Materialmenge pro Zeiteinheit, Umdrehungszahl der rotierenden Bauteils, etc.) und aufgebaut ist (Sieb), dass der Umhüllungsabfall nicht durch das Sieb 6 hindurchgehen kann, ist es auch möglich, das Sieb 6 so auszubilden, dass es sich, abweichend von der Darstellung der Fig. 4, über die gesamte axiale Länge des Rotationskörpers 8 erstreckt.

Die Ausführungsform nach Fig. 5 arbeitet im Prinzip in der gleichen Weise kontinuierlich wie die Ausführungsform nach Fig. 4, sie unterscheidet sich von dieser jedoch dadurch, dass der durch die Rotation der Mitnehmer 2 gebildete Rotationskörper 8 nicht kegelförmig ist, so dass der durch die Kegelform des Rotationskörpers 8 in Fig. 4 bedingte Transport der verarbeiteten Materialien in Axialrichtung auf andere Weise bewirkt wird. Das geschieht nach Fig. 5 dadurch, dass die Mitnehmer, die in Fig. 5 nicht einzeln eingezeichnet sind, entlang ihrer Drehachse 24 spiralig angeordnet sind, wie durch die Spirallinien 20 angedeutet ist. Ausserdem sind in engem Abstand von dem durch die Rotation der Mitnehmer gebildeten Rotationskörper 8 spiralförmige Führungsleisten 21 auf der Innenwand des Gehäuses 3 sowie gegebenenfalls auf der Innenseite des Siebes 6 angeordnet. Auf diese Weise ergibt sich ebenfalls ein axialer Transport der verarbeiteten Materialien von der Zuführungsvorrichtung 1 bis zu der Abführungsvorrichtung 11 für den Umhüllungsabfall, so dass also die Vorrichtung nach Fig. 5 in ihrem Aufbau im übrigen der Vorrichtung nach Fig. 4 entspricht.

Es sei darauf hingewiesen, dass an sich die spiralige Anordnung der Mitnehmer 2 oder die Anordnung der Führungsleisten 21 allein schon zum Erzeugen einer ausreichenden Transportwirkung in axialer Richtung ausreichend sein kann, so dass nicht unbedingt diese beiden Massnahmen gemeinsam vorgesehen sein müssen. Andererseits ist es auch, zur Verstärkung der axialen Transportwirkung, in der Vorrichtung nach Fig. 4 möglich, dort entsprechende Führungsleisten 21 vorzusehen.

In Fig. 6 ist eine Ausführungsform einer diskontinuierlich chargenweise betreibbaren Vorrichtung gezeigt, in welcher die Beschickung axial erfolgt, da hier die Zuführungsvorrichtung 1 axial bezüglich des rotierenden Bauteils 4 in das Gehäuse 3 mündet. Auf diese Weise ist es möglich, das Sieb 6 so auszubilden, dass es sich um den gesamten Umfang des durch die Rotation der Mitnehmer 2 gebildeten Rotationskörpers 8 erstreckt, so dass die freigesetzten Zellstoff-Flocken optimal über mehrere Absaugrohre 10, die um den Umfang des Siebes 6 herum verteilt sind, abgesaugt werden können; in entsprechender Weise ist auch eine optimale Absaugung des Umhüllungsabfalls mittels der Abführungsvorrichtung 11, die im Bereich des Umfangs des Rotationskörpers 8 angeordnet sind, möglich. Die Drehbewegung der Drehachse 24 des rotierenden Bauteiles 4 ist mit Pfeil 25 angedeutet.

Selbstverständlich ist die Art der Ausführungsform der Fig. 6 auch bei den kontinuierlich arbeitenden Vorrichtungen nach den Fig. 4 und 5 anwendbar.

Schliesslich ist in Fig. 7 eine Kombination der Vorrichtung nach Fig. 1 mit einer üblichen Schneidvorrichtung 22 dargestellt. Diese Schneidvorrichtung 22 kann beispielsweise von der Art sein, wie sie in der deutschen Offenlegungsschrift 2 704 035 dargestellt und beschrieben ist, wobei mit dieser eine Vorzerkleinerung der Zellstoff-Hygieneartikel durchgeführt wird. Ausserdem ist ein Absperrschieber 23 zwischen der Schneidvorrichtung 22 und der darunter befindlichen Vorrichtung zum Trennen der Zellstoff-Flocken und der Umhüllungen vorgesehen, und ein Absperrschieber 19 befindet sich in dem Absaugrohr 11 für den Umhüllungsabfall. Die Absperrschieber 19 und 23 können im übrigen in der Weise angeordnet und ausgebildet sein, wie anhand der Fig. 2 erläutert.

Die Schneidvorrichtung 22, die auch entfernt von der Vorrichtung zum Trennen der Zellstoff-Flocken von deren Umhüllungen vorgesehen sein kann, wobei dann der Transport der vorzerkleinerten Zellstoff-Hygieneartikel zwischen den beiden Vorrichtungen mittels üblicher mechanischer oder pneumatischer Transportvorrichtungen erfolgt, kann auch irgendeiner der anderen Vorrichtungen vorgeschaltet sein, insbesondere der Vorrichtung nach Fig. 4 oder 5.

Im übrigen sei darauf hingewiesen, dass die Merkmale der verschiedenen Vorrichtungen, soweit sich diese nicht gegenseitig ausschliessen, miteinander kombiniert werden können; so kann zum Beispiel die Anordnung mehrerer Siebe 6 und Siebe 15, wie sie in der Fig. 2 dargestellt ist,

auch bei den anderen Vorrichtungen vorgesehen sein, und es können auch mehr als zwei Siebe 6 und/oder Siebe 15 hintereinander angeordnet sein, um noch mehr verschiedene Fraktionen von Zellstoff-Flocken gewinnen zu können.

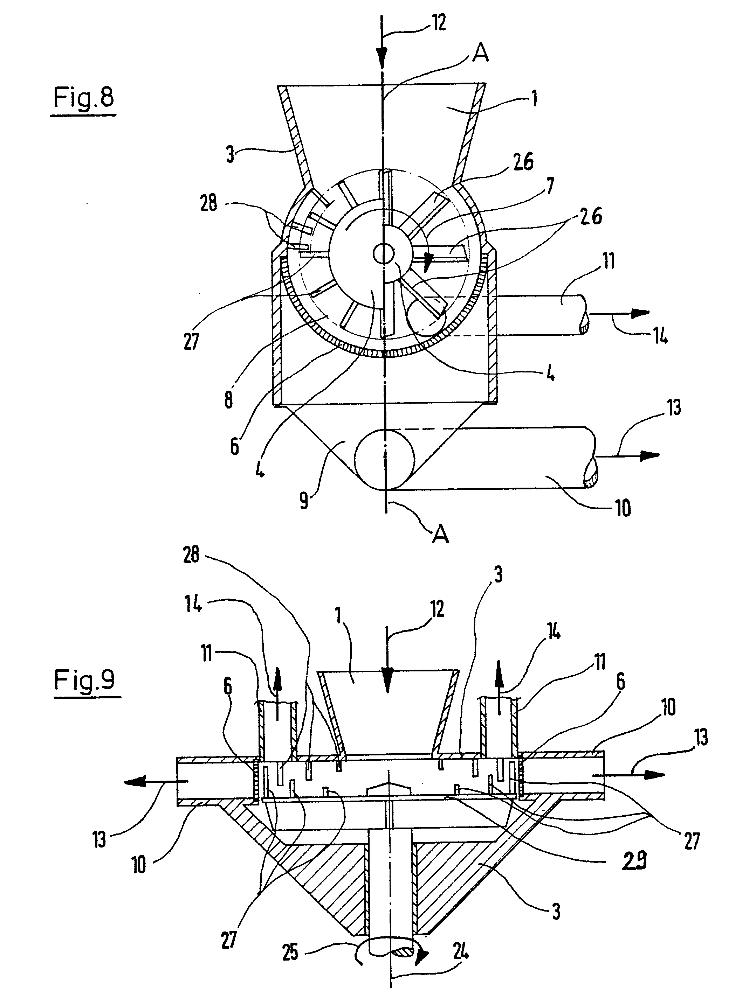

Die Fig. 8 zeigt eine fünfte Ausführungsform, deren Teil, in welchem das Zerschlagen der Umhüllungen erfolgt, nur zur Hälfte links von der Achslinie A–A dargestellt ist. In dem Gehäuse 3, das gleich oder ähnlich wie das nach Fig. 1 ist, ist ein rotierendes Bauteil 4 mit starren Mitnehmern 27, die völlig stumpf sein können, zum Beispiel aus Rundmaterial, vorgesehen. Mitnehmergegenstücke 28 sind stationär am Gehäuse 3 und/oder am Sieb 6 auf Lücke zu den starren Mitnehmern 27 angeordnet, d.h. so, dass sie nicht direkt mit den Mitnehmern 27 in Berührung kommen.

Wenn das Sieb 6 eine rauhe Oberfläche auf seiner den Mitnehmern 27 zugewandten Seite aufweist, dann sind Mitnehmergegenstücke 28 nicht zwingend erforderlich. Der Umfang des Rotationskörpers 8 ist so gross gehalten, dass Zellstoff-Hygieneartikel ihn nicht umwickeln können, was auch durch Vorschalten einer Schneidvorrichtung 22 und/oder durch hohe Umfangsgeschwindigkeit und/oder mittels der Mitnehmergegenstücke 28 erreicht werden kann.

Ausserdem zeigt Fig. 8 eine sechste Ausführungsform, deren von der fünften Ausführungsform unterschiedlicher Teil hälftig rechts der Achslinie A–A gezeigt ist. Hier ist das rotierende Bauteil 4 mit starren messerartigen Mitnehmern 26 versehen, diese können auch gemeinsam mit Mitnehmergegenstücken 28 wirken.

Die Vorrichtungen gemäss Fig. 8 arbeiten diskontinuierlich.

In der Ausführungsform nach Fig. 9 sind starre Mitnehmer 27 auf einen rotierenden ebenen Bauteil 29 angeordnet, vorzugsweise mit zunehmender Länge der starren Mitnehmer 27 in Richtung zunehmenden Durchmessers. Die stationären Mitnehmergegenstücke 28 sind auf Lücke und mit gleichsinnig zunehmender Länge angeordnet sowie derart, dass sie in den durch die Rotation der Mitnehmer gebildeten Rotationskörper hineinragen. Die Vorrichtung arbeitet diskontinuierlich.

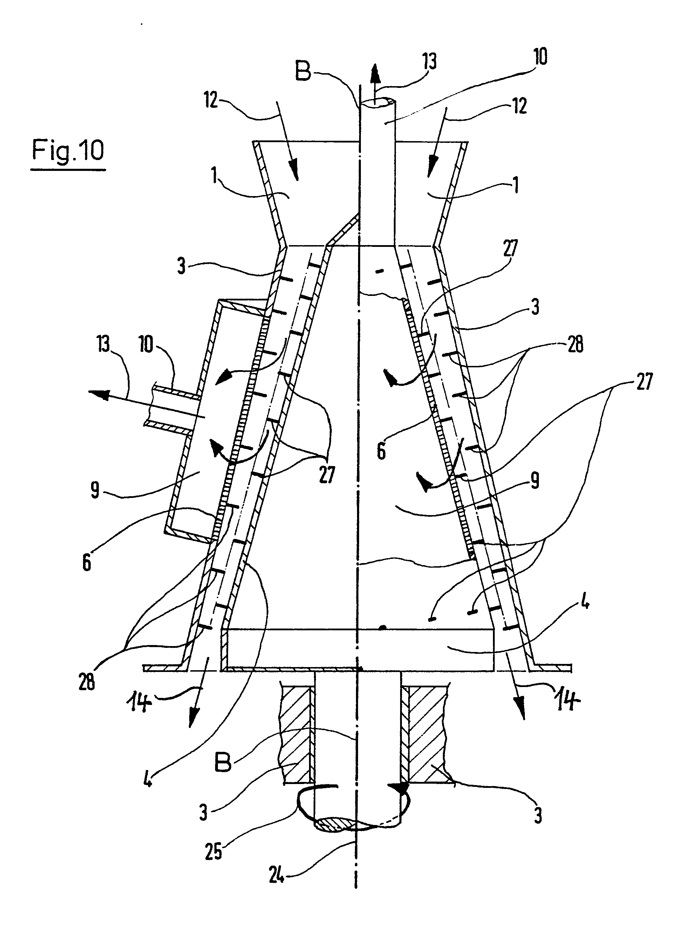

Die Fig. 10 zeigt jeweils hälftig zwei weitere Ausführungsformen, die prinzipiell der Fig. 9 entsprechen, bei denen jedoch durch kegelförmige bzw. konische Gestaltung des rotierenden Bauteils 4 eine längere Wirkungsstrecke bei relativ kleinem Durchmesser erzielt wird.

In der Ausführungsform, die links der Achslinie B–B dargestellt ist, ist das rotierende Bauteil 4 mit starren Mitnehmern 27 versehen, und es sind stationäre Mitnehmergegenstücke 28 am Gehäuse 3 angeordnet. Das Gehäuse 3 ist im Bereich des kleinen Kegeldurchmessers d beginnend als Sieb 6, partiell oder ganzflächig, ausgebildet. Die Absaugvorrichtung 9 ist vorzugsweise ringkanalförmig auf dem Gehäuse 3 aufgesetzt. Die Kegelwinkel von rotierendem Bauteil 4 und Gehäuse 3 können unterschiedlich sein.

In der Ausführungsform, die rechts der Achslinie B–B gezeigt ist, ist das rotierende Bauteil 4 partiell oder ganzflächig als Sieb 6 ausgebildet, und zwar vorzugsweise am kleinen Durchmesser des Kegels beginnend. Durch Verschieben des rotierenden Bauteils 4 längs seiner Drehachse 24 kann der Spalt, der durch den Innen- und Aussenkegel, d.h. zwischen Gehäuse 3 und rotierendem Bauteil 4, gebildet wird, in Grenzen verstellt werden. Die Vorrichtung arbeitet kontinuierlich.

## Patentansprüche

1. Verfahren zur Trennung von Zellstoff-Flocken von deren Umhüllungen von Zellstoff-Hygieneartikeln, welche als Ausschuss bei der Herstellung, insbesondere von Höschenwindeln, Damenbinden, Krankenbettunterlagen mit Umhüllungen, wie Kunststoffolien, Tissue, Klebestreifen, Gummibändern o.dgl. anfallen, wobei die Zellstoff-Hygieneartikel in den Wirkungsbereich von in einem Gehäuse rotierenden Mitnehmern gefördert, die Zellstoff-Flocken von den Mitnehmern freigesetzt sowie die freigesetzten Zellstoff-Flocken getrennt von den Umhüllungen aus dem Gehäuse abgesaugt und die Umhüllungen aus dem Wirkungsbereich der rotierenden Mitnehmer entfernt werden, dadurch gekennzeichnet, dass die Zellstoff-Hygieneartikel von den rotierenden Mitnehmern (2, 27), die an einem oder mehreren rotierenden Bauteilen (4) angeordnet sind, allein oder in Zusammenwirken mit stationären Mitnehmergegenständen (28) im wesentlichen zerschlagen werden, und dass gleichzeitig während des Zerschlagens die freigesetzten Zellstoff-Flocken über ein Sieb (6) abgesaugt werden, wobei entweder die Umhüllungen nur so grob zerschlagen werden, dass sie nicht durch das Sieb (6) hindurchgehen, oder die Zellstoff-Flocken über das Sieb (6) abgesaugt werden, bevor die Umhüllungen so fein zerschlagen sind, dass sie durch das Sieb (6) hindurchgehen.

2. Verfahren nach Anspruch 1, dadurch gekennzeichnet, dass die Zellstoff-Hygieneartikel diskontinuierlich chargenweise zu den Mitnehmern (2, 27) zugeführt, zerschlagen, dabei die freigesetzten Zellstoff-Flocken abgesaugt und anschliessend die zerschlagenen Umhüllungen vor Zuführung der nächsten Charge aus dem Wirkungsbereich der Mitnehmer (2, 27) entfernt werden.

3. Verfahren nach Anspruch 1, dadurch gekennzeichnet, dass die Zellstoff-Hygieneartikel in den einen Endbereich eines von den Mitnehmern (2, 27) durch Rotation gebildeten Rotationskörpers (8) kontinuierlich zugeführt, während des Zerschlagens in Axialrichtung längs des Rotationskörpers (8) gefördert und die zerschlagenen Umhüllungen am anderen Endbereich des Rotationskörpers (8) kontinuierlich abgeführt, vorzugsweise abgesaugt, werden, während die Zellstoff-Flocken in dem Zwischenbereich zwischen den beiden Endbereichen und gegebenenfalls in einem oder beiden Endbereichen des Rotationskörpers (8) kontinuierlich abgesaugt werden.

4. Verfahren nach Anspruch 1, 2 oder 3, dadurch gekennzeichnet, dass die Zellstoff-Flocken über mehrere hintereinander angeordnete Siebe (6) und/oder (15) abgesaugt werden.

5. Vorrichtung zum Durchführen des Verfahrens nach einem der Ansprüche 1 bis 4 zur Trennung der Zellstoff-Flocken von deren Umhüllungen von Zellstoff-Hygieneartikeln, welche als Ausschuss bei der Herstellung, insbesondere von Höschenwindeln, Damenbinden, Krankenbettunterlagen mit Umhüllungen, wie Kunststoffolien, Tissue, Klebestreifen, Gummibändern o.dgl. anfallen, mit einer Zuführungsvorrichtung zum Zuführen der Zellstoff-Hygieneartikel in den Wirkungsbereich von in einem Gehäuse rotierenden Mitnehmern und einer Abführungsvorrichtung (9) zum Abführen der freigesetzten Zellstoff-Flocken aus dem Gehäuse, dadurch gekennzeichnet, dass die scharf oder stumpf ausgebildeten Mitnehmer (2, 27), die an einem oder mehreren rotierenden Bauteilen (4) beweglich oder starr angeordnet sind, allein oder zusammen mit stationären, beweglich oder starr vorgesehenen sowie scharf oder stumpf ausgebildeten Mitnehmergegenstücken (28) so angeordnet und/oder ausgebildet sind, dass sie die Zellstoff-Hygieneartikel im wesentlichen zerschlagen, und dass zwischen den Mitnehmern (2, 27) und der Abführungsvorrichtung (9) zumindest ein Sieb (6) ganz oder teilweise um den durch die Rotation der Mitnehmer (2, 27) gebildeten Rotationskörper (8) herum in einem derart geringen Abstand vorgesehen ist, dass auf der rauhen oder glatten Innenseite des Siebes (6) befindliche zu trennende Materialien von den Mitnehmern (2, 27) erfassbar sind.

6. Vorrichtung nach Anspruch 5, dadurch gekennzeichnet, dass der von den Mitnehmern (2) durch Rotation gebildete Rotationskörper (8) in seinem Durchmesser fortlaufend abnimmt, insbesondere ein Kegel ist, und dass die Zuführungsvorrichtung (1) im Bereich des kleinen Durchmessers (d) mündet, dass im Bereich des grossen Durchmessers (D) eine kontinuierlich arbeitende Abführungsvorrichtung (11) für die zerschlagenen Umhüllungen mündet, und dass das Sieb (6), vorzugsweise zwischen dem kleinen und grossen Durchmesser (d, D) ganz oder teilweise um den Rotationskörper (8) herum angeordnet ist.

7. Vorrichtung nach Anspruch 5, dadurch gekennzeichnet, dass die Mitnehmer (2) entlang ihrer Drehachse (24) spiralig angeordnet sind und/oder in engem Abstand von dem durch die Rotation der Mitnehmer (2) gebildeten Rotationskörper (8) spiralförmige Führungsleisten (21) angeordnet sind, und dass am Anfang des durch die spiralförmige Anordnung der Mitnehmer (2) und/oder Führungsleisten (21) gebildeten Transportwegs, die Zuführungsvorrichtung (1) und am Ende des Transportwegs eine kontinuierlich arbeitende Abführungsvorrichtung (11) für die zerschlagenen Umhüllungen mündet, und dass das Sieb (6) zwischen dem Anfang und Ende des Transportwegs ganz oder teilweise um den Rotationskörper (8) angeordnet ist.

8. Vorrichtung nach Anspruch 5, dadurch gekennzeichnet, dass der durch die Rotation der Mitnehmer (2) gebildete Rotationskörper (8) keine axiale Transportwirkung hat und die Zuführungsvorrichtung (1) und die Abführungsvorrichtung (9) für die Zellstoff-Flocken einerseits und eine Abführungsvorrichtung (11) für die zerschlagenen Umhüllungen andererseits, abwechselnd diskontinuierlich betreibbare Vorrichtungen sind.

9. Vorrichtung nach Anspruch 5, 6 oder 7, dadurch gekennzeichnet, dass die Zuführungsvorrichtung (1) bezüglich des von den Mitnehmern (2) durch Rotation gebildeten Rotationskörpers (8) als axiale Zuführungsvorrichtung (1) ausgebildet ist.

10. Vorrichtung nach einem der Ansprüche 5 bis 9, dadurch gekennzeichnet, dass vor oder in der Zuführungsvorrichtung (1) eine Schneidvorrichtung (22) vorgesehen ist.

11. Vorrichtung nach einem der Ansprüche 5 bis 10, dadurch gekennzeichnet, dass das Sieb (6) eines der folgenden Siebe ist:

(a) ein Blechsieb mit glatter Wirkfläche;

(b) ein Blechsieb mit rauher Wirkfläche, bei dem die durch die Lochung verbliebenen Stege oder Randzonen (Wulste) der Lochung ganz oder teilweise deformiert sind, vorzugsweise ein Schlitz-, Rund- oder Dreieck-Brückenlochsieb oder ein Sieb mit Raspellochungen, bei dem die Lochung mittels Durchdrücken des Materials mit spitzem Dorn hergestellt ist;

(c) ein Drahtsieb aus Drahtgeflecht oder Drahtgewebe, das eine rauhe Oberflächenstruktur aufweist; oder

(d) ein Drahtsieb oder Drahtgeflecht mit glatter Wirkfläche, die beispielsweise durch Walzen oder Pressen des Siebes geglättet worden ist.

12. Vorrichtung nach einem der Ansprüche 5 bis 11, dadurch gekennzeichnet, dass die Mitnehmergegenstücke (28) in den durch die Rotation der Mitnehmer (27) gebildeten Rotationskörper (8) eingreifen oder nicht eingreifen.

13. Vorrichtung nach einem der Ansprüche 5 bis 12, dadurch gekennzeichnet, dass

(a) die Mitnehmer (27) auf einem ebenen rotierenden Bauteil (4) angeordnet sind und dass vorzugsweise die Mitnehmer (27) und/oder die Mitnehmergegenstücke (28) so ausgebildet sind, dass ihre Länge in Richtung des grösseren Durchmessers zunimmt; oder dass

(b) die Mitnehmer auf einem konischen rotierenden Bauteil (4) angeordnet sind, wobei entweder das konische Bauteil (4) oder das Gehäuse (3) ganz oder teilflächig als Sieb (6) ausgebildet ist, und in letzterem Falle die Abführungsvorrichtung (9) für die Zellstoff-Flocken vorzugsweise ringkanalförmig auf dem Gehäuse (3) vorgesehen ist.

**Claims**

1. A process for separating cellulose flocks from their coverings in cellulose hygiene articles which accumulate as waste during production, more especially in composite diapers, sanitary napkins, sick-bed underpads with coverings, such as plastics films, tissue paper, adhesive strips, elastic bands or the like, the cellulose hygiene articles being transported into the effective range of entraining elements rotating in a housing, the cellulose flocks being released from the entraining elements and the released cellulose flocks being removed from the housing by suction separately from the coverings and the coverings being removed from the effective range of the rotating entraining elements, characterized in that the cellulose hygiene articles are substantially crushed by the rotating entraining elements (2, 27), which are arranged on one or more rotating components (4), either on their own or in conjunction with stationary entrainment countersupports (28) and in that the released cellulose flocks are removed under suction through a sieve (6) during the crushing operation, either the coverings being crushed only so coarsely that they do not pass through the sieve (6) or the cellulose flocks being removed under suction through the sieve (6) before the coverings have been crushed to such an extent that they pass through the sieve (6).

2. A process as calimed in Claim 1, characterized in that the cellulose hygiene articles are fed periodically in batches to the entraining elements (2, 27), crushed and at the same time the released cellulose flocks are removed under suction, after which the crushed coverings are removed from the effective range of the entraining elements (2, 27) before the next batch is delivered.

3. A process as claimed in Claim 1, characterized in that the cellulose hygiene articles are fed continuously into the end zone of a body of rotation (8) formed by the entraining elements (2, 27) through rotation, are transported axially along the body of rotation (8) during crushing and the crushed coverings are continuously removed, preferably under suction, at the other end of the body of rotation (8) while the cellulose flocks are continuously removed under suction in the intermediate zone between the two end zones and optionally in one or both end zones of the body of rotation (8).

4. A process as claimed in Claim 1, 2 or 3, characterized in that the cellulose flocks are removed under suction through several sieves (6) and/or (15) arranged one behind the other.

5. A machine for carrying out the process claimed in any of Claims 1 to 4 for separating cellulose flocks from their coverings in cellulose hygiene articles which accumulate as waste during production, particularly in composite diapers, sanitary napkins, sick-bed underpads with coverings, such as plastics films, tissue paper, adhesive strips, elastic bands or the like, comprising feed means for feeding the cellulose hygiene articles into the effective range of entraining elements rotating in a housing and removal means (9) for removing the released cellulose flocks from the housing, characterized in that the sharp or blunt entraining elements (2, 27), which are displaceably or rigidly arranged on one or more rotating components (4), are arranged and/or designed either on their own or together with stationary, displaceably or rigidly arranged, sharp or blunt entrainment countersupports (28) in such a way that they substantially crush the cellulose hygiene articles and in that, between the entraining elements (2, 27) and the removal means (9), at least one sieve (6) is provided completely or partly around the body of rotation (8) formed through the rotation of the entraining elements (2, 27) with such a narrow gap in between that materials to be separated present on the rough or smooth inside of the sieve (6) can be picked up by the entraining elements (2, 27).

6. A machine as claimed in Claim 5, characterized in that the body of rotation (8) formed by the entraining elements (2) decreases continuously in its diameter and, more especially, is a cone and in that the feed means (1) opens in the region of the small diameter (d), in that a continuous removal means (11) for the crushed coverings opens in the region of the large diameter (D) and in that the sieve (6) is arranged completely or partly around the body of rotation (6), preferably between the small and large diameter (d, D).

7. A machine as claimed in Claim 5, characterized in that the entraining elements (2) are arranged spirally along their axis of rotation (24) and/or spiral guide ribs (21) are arranged at a narrow distance from the body of rotation (8) formed by the rotation of the entraining elements (2) and in that the feed means (1) and a continuous removal means (11) for the crushed coverings open respectively at the beginning and end of the transport path formed by the spiral arrangement of the entraining elements (2) and/or guide ribs (21) and in that the sieve (6) is arranged completely or partly around the body of rotation (8) between the beginning and end of the transport path.

8. A machine as claimed in Claim 5, characterized in that the body of rotation (8) formed by the rotation of the entraining elements (2) has no axial transporting effect and the feed means (1) and removal means (9) for the cellulose flocks on the one hand and a removal means (11) for the crushed coverings on the other hand are means designed to operate intermittently in alternation.

9. A machine as claimed in Claim 5, 6 or 7, characterized in that the feed means (1) is an axial feed means (1) in relation to the body of rotation (8) formed by the rotation of the entraining elements (2).

10. A machine as claimed in any of Claims 5 to 9, characterized in that a cutting unit (22) is provided in front of or in the feed means (1).

11. A machine as claimed in any of Claims 5 to 10, characterized in that the sieve (6) is one of the following sieves:

(a) a sheet metal sieve with a smooth active surface;

(b) a sheet metal sieve with a rough active surface, in which the webs remaining after perforation or marginal zones (beads) of the perforation are completely or partly deformed, preferably a slotted, round or triangular bridge hole sieve or a sieve with rasp-like perforations in which the perforations are formed by piercing the material with a pointed tool;

(c) a wire sieve of wire netting or wire cloth which has a rough surface; or

(d) a wire sieve or wire netting having a smooth active surface which has been smoothed for example by rolling or pressing of the sieve.

12. A machine as claimed in any of Claims 5 to 11, characterized in that the entrainment countersupports (28) engage or do not engage in the body of rotation (8) formed by the rotation of the entraining elements (27).

13. A machine as claimed in any of Claims 5 to 12, characterized in that

(a) the entraining elements (27) are arranged on a flat rotating component (4) and in that the entraining elements (27) and/or the entrainment countersupports (28) are designed in such a way that their length increases in the direction of the larger diameter or

(b) the entraining elements are arranged on a conical rotating component (4), either the conical component (4) or the housing (3) being completely or partly in the form of a sieve and, in the latter case, the removal means (9) for the cellulose flocks preferably being provided in the form of an annular passage on the housing (3).

**Revendications**

1. Procédé pour la séparation des bourres de cellulose et de leurs enveloppes dans les articles hygiéniques en cellulose, qui se présentent sous forme de rebuts dans la fabrication, en particulier de couches-culottes, serviettes hygiéniques, garnitures de dessous ou alèses pour lits de malades, comportant des enveloppes, telles que des feuilles de matière plastique, des tissus, des rubans adhésifs, des bandes en caoutchouc ou analogues, dans lequel les articles hygiéniques en cellulose sont acheminés dans la zone d'action d'organes d'entraînement en rotation dans un carter, les bourres de cellulose sont libérées par les organes d'entraînement de même que les bourres de cellulose séparées des enveloppes sont extraites du carter par aspiration et que les enveloppes sont éliminées de la zone d'action des organes d'entraînement rotatifs, caractérisé en ce que les articles hygiéniques en cellulose sont essentiellement désagrégés par les organes d'entraînement rotatifs (2, 27), qui sont montés sur un ou plusieurs éléments de constitution rotatifs (4), à savoir par lesdits organes d'entraînement seuls ou en coopération avec des contre-organes fixes (28) s'opposant aux organes d'entraînement, et que, simultanément pendant la désagrégation, les bourres de cellulose libérées sont aspirées à travers un crible (6), les enveloppes étant grossièrement désagrégées seulement de manière à ne pas passer à travers le crible (6) ou bien les bourres de cellulose étant aspirées à travers le crible (6) avant que les enveloppes ne soient désagrégées assez finement pour pouvoir traverser le crible (6).

2. Procédé selon la Revendication 1, caractérisé en ce que les articles hygiéniques en cellulose sont amenés aux organes d'entraînement (2, 27) de manière discontinue par charges, pour être désagrégés, tandis qu'à cette occasion les bourres de cellulose libérées sont extraites par aspiration et que consécutivement les enveloppes désagrégées sont éliminées de la zone d'action des organes d'entraînement (2, 27) avant l'amenée de la charge suivante.

3. Procédé selon la Revendication 1, caractérisé en ce que les articles hygiéniques en cellulose sont admis en continu dans un corps de révolution (8) formé par la rotation d'une région d'extrémité de l'un des organes d'entraînement (2, 27), qu'ils sont convoyés pendant la désagrégation en direction axiale le long du corps de révolution (8) et que les enveloppes désagrégées sont éliminées, de préférence aspirées, en continu à l'autre extrémité du corps de révolution (8), tandis que les bourres de cellulose sont extraites par aspiration en continue dans la zone intermédiaire entre les deux régions d'extrémité et éventuellement dans une ou les deux régions d'extrémité du corps de révolution (8).

4. Procédé selon la Revendication 1, 2 ou 3, caractérisé en ce que les bourres de cellulose sont extraites par aspiration à travers plusieurs cribles (6) et/ou (15) disposés l'un derrière l'autre.

5. Dispositif pour mettre en œuvre le procédé selon l'un des Revendications 1 à 4 pour la séparation des bourres de cellulose et de leurs enveloppes dans les articles hygiéniques en cellulose, qui se présentent sous forme de rebuts dans la fabrication, en particulier de couches-culottes, serviettes hygiéniques, garnitures de dessous ou alèzes pour lits de malades comportant des enveloppes, telles que des feuilles de matière plastique, des tissus, des rubans adhésifs, des bandes de caoutchouc ou analogues, pourvu d'un dispositif d'admission pour l'amenée des articles hygiéniques en cellulose dans la zone d'action d'organes d'entraînement en rotation dans un carter et d'un dispositif d'évacuation (7) pour l'évacuation à partir du carter des bourres de cellulose libérées, caractérisé en ce que les organes d'entraînement (2, 27) conformés à arêtes vives ou émoussées qui sont montés de manière amovible ou rigide sur un ou plusieurs éléments de constitution (4) rotatifs, sont disposés et/ou agencés seuls ou conjointement avec des contre-organes fixes (28) qui sont opposés aux organes d'entraînement et qui sont prévus pour être montés de manière amovible ou rigide de même que conformés à arêtes vives ou émoussées, de telle façon qu'ils désagrègent essentiellement les articles hygiéniques en cellulose et qu'entre les organes d'entraînement (2, 27) et le dispositif d'évacuation (9) est prévu au moins un crible (6), tout ou partiellement autour du corps de révolution (8) formé par la rotation des organes d'entraînement (2, 27) et à une distance suffisamment faible de celui-ci pour que les matériaux à séparer se trouvant sur le côté intérieur rugueux ou lisse du crible (6) puisse être saisis par les organes d'entraînement (2, 27).

6. Dispositif selon la Revendication 5, caractérisé en ce que le corps de révolution (8), formé par la rotation des organes d'entraînement (2), diminue continuellement de diamètre, et est en particulier un cône, et que le dispositif d'admission (1) débouche dans la région du petit diamètre (d), que dans la région du grand diamètre (D) débouche un dispositif d'évacuation (11) pour les enveloppe désagrégées fonctionnant en continu, et que le crible (6) est disposé tout ou partiellement autour du corps de révolution (8), de préférence entre le petit et le grand diamètres (d, D).

7. Dispositif selon la Revendication 5, caractérisé en ce que les organes d'entraînement (2) sont disposés en spirale suivant leur axe de rotation (24) et/ou qu'à distance étroite du corps de révolution (8) formé par la rotation des organes d'entraînement (2) sont disposées des lattes de guidage (21) de forme spiralée, qu'au début du chemin de transport formé par la disposition en spirale des organes d'entraînement (2) et/ou des lattes de guidage (21) débouche le dispositif d'admission (1) tandis qu'à la fin du chemin de transport débouche un dispositif d'évacuation (11), fonctionnant en continu, pour les enveloppes désagrégées, et que le crible (6) est disposé, tout ou partiellement autour du corps de révolution (8), entre le début et la fin du chemin de transport.

8. Dispositif selon la Revendication 5, caractérisé en ce que le corps de révolution (8) formé par la rotation des organes d'entraînement (2) n'exerce aucune action de transport axiale et que le dispositif d'admission (1) et le dispositif d'évacuation (9) pour les bourres de cellulose, d'une part, et un dispositif d'évacuation (11) pour les enveloppes désagrégées, d'autre part, sont des dispositifs aptes à être mis en fonctionnement en alternance, de manière discontinue.

9. Dispositif selon la Revendication 5, 6 ou 7, caractérisé en ce que le dispositif d'admission (1) est agencé en tant que dispositif d'admission (1) axial par rapport au corps de révolution (8) formé par les organes d'entraînement (2) par rotation de ceux-ci.

10. Dispositif selon l'une des Revendications 5 à 9, caractérisé en ce qu'en amont du dispositif d'admission (1) ou dans celui-ci est prévu un dispositif de coupe (22).

11. Dispositif selon l'une des Revendications 5 à 10, caractérisé en ce que le crible (6) est l'un des cribles suivants:

(a) un crible en tôle à surface active lisse;

(b) un crible en tôle à surface active rugueuse, dans lequel les intervalles de matière subsistant entre les perforations ou les zones de bordure (renflements ou talons) des performations sont déformées en tout ou partie, de préférence un crible à cloison perforée par des trous en fente, des trous ronds ou des trous triangulaires ou un crible à perforations en trous de râpe dans lequel les perforations sont réalisées par le perçage du matériau au moyen d'un mandrin pointu;

(c) un crible en fil métallique en treillis métallique ou en tissu métallique qui présente une structure de surface rugueuse; ou

(d) un crible en fil métallique ou un treillis en fil métallique à surface active lisse qui a été rendue lisse, par laminage ou traitement à la presse du crible.

12. Dispositif selon l'une des Revendications 5 à 11, caractérisé en ce que les contre-organes (28) opposés aux organes d'entraînement pénètrent ou ne pénètrent pas dans le corps de révolution (8) formé par la rotation des organes d'entraînement (27).

13. Dispositif selon l'une des Revendications 5 à 12, caractérisé en ce que

(a) les organes d'entraînement (27) sont montés sur un élément de constitution rotatif (4) plan et que, de préférence, les organes d'entraînement (27) et/ou les contre-organes (28) opposés aux organes d'entraînement sont agencés de façon que leur longueur augmente en direction du diamètre le plus grand; ou que

(b) les organes d'entraînement sont montés sur un élément de constitution rotatif (4) conique, dans quel cas l'élément de constitution conique (4) ou le carter (3) est agencé sur tout ou partie de sa surface en tant que crible (6), et dans ce dernier cas le dispositif d'évacuation (9) pour les bourres de cellulose est de préférence prévu en forme de canal annulaire sur le carter (3).

0 091 982

Fig.1

Fig.2

Fig.3

15

Fig.4

Fig.5

## Fig.6

## Fig.7

Fig.8

Fig.9

Fig.10